Europäisches Patentamt

European Patent Office

Office européen des brevets

(11) Publication number: **0 353 091**
**A2**

# (12) EUROPEAN PATENT APPLICATION

(21) Application number: 89307701.6

(22) Date of filing: 28.07.89

(51) Int. Cl.5: **F 16 F 7/10**
B 60 H 1/32, F 04 B 39/12,
F 04 B 39/00

(30) Priority: 29.07.88 JP 99958/88

(43) Date of publication of application:
**31.01.90 Bulletin 90/05**

(84) Designated Contracting States: **DE FR GB IT SE**

(71) Applicant: **SANDEN CORPORATION**
**20 Kotobuki-cho**
**Isesaki-shi Gunma, 372 (JP)**

(72) Inventor: **Shimazaki, Seiji**
**639-11 Naganuma-cho**
**Isesaki-shi Gunma 372 (JP)**

(74) Representative: **Jackson, Peter Arthur et al**
**GILL JENNINGS & EVERY 53-64 Chancery Lane**
**London WC2A 1HN (GB)**

(54) Vibration-damping mechanism for an automotive air conditioning compressor.

(57) A vibration-absorbing mechanism for a compressor in an automotive air conditioning system comprises a mass (10) which includes first penetration hole (101). First and second bushings (13,14) each includes an inner cylinder (131) which is provided with a second penetration hole (130), an outer cylinder (132) and a compressed elastic member (133) between the outer surface of the inner cylinder and the inner surface of the outer cylinder. The first and second bushings are disposed at both ends of the mass with the first and second penetration holes aligned. A screw bolt (15) passes through the penetration holes and is fastened by a nut (16). According to the above mechanism, vibration which the compressor receives from an engine through a mounting bracket can be reduced. Therefore, durability and silentness of the compressor also can be improved.

Fig. 1

Fig. 2

## Description

### VIBRATION-DAMPING MECHANISM FOR AN AUTOMOTIVE AIR CONDITIONING COMPRESSOR

This invention relates to a vibration-damping mechanism for a compressor for use in an automotive air conditioning system.

A compressor, which is used in an automotive air conditioning system, is usually mounted on the engine of the automobile through a suitable mounting bracket. In the above structure, if the strength of the mounting blacket is inadequate for the weight of the compressor, vibration of the compressor, which occurs owing to vibration of the engine, is increased by the mounting bracket, and may become of very large amplitude. The increase in vibration of the compressor may reach reasonance with respect to vibration of the engine within the range of the usual rotational engine speed.

If a compressor is subjected to high vibration, the durability of the compressor may be reduced. Moreover, the mounting bracket may be broken by fatigue. In the prior art, to reduce the above problem, it is known to increase the thickness of the mounting bracket or the number of reinforcing ribs thereof. However, even though such an enlarged mounting bracket is used, the increase does not contribute significantly to a reduction in the vibration because vibration of the mounting bracket is actually increased owing to increased weight thereof.

Moreover, it may be impossible to find enough space in an engine compartment to accommodate a large mounting bracket.

In addition, if an engine produces a large vibration or a compressor resonates with an engine, even though the strength of a mounting bracket is increased very largely, the vibration may still be high.

It is a primary object of the present invention to provide a vibration-damping mechanism for a compressor which can reduce vibration which the compressor receives from an engine through a mounting bracket, thereby improving durability and silentness of the compressor.

A vibration-damping mechanism for a compressor in an automotive air conditioning system comprises, according to the present invention, a mass with a first penetration hole; first and second bushings each including an inner cylinder provided with a second penetration hole, an outer cylinder and an elastic member compressed between the outer surface of the inner cylinder and inner surface of the outer cylinder, the first and second bushings being disposed at opposite ends of the mass with the first and second penetration holes mutually aligned; and a screw bolt passing through the first and second penetration holes and carrying by a nut to hold the mass and bushings together.

In the accompanying drawings:-

Figure 1 is a front view of a vibration absorbing mechanism in accordance with one embodiment of the present invention;

Figure 2 is a cross-sectional view of a bushing of the mechanism shown in Figure 1;

Figure 3 is a schematic view illustrating the installed state of the mechanism shown in Figure 1;

Figure 4(a)-(c) are descriptive views illustrating the operating principle of a mechanism as shown in Figure 1;

Figure 5 is a graph illustrating the realtionship between rotational speed of an engine and vibration level in a conventional automotive air conditioning system; and,

Figure 6 is a graph illustrating the relationship between rotational speed of an engine and vibration level in a automotive air conditioning system including a mechanism as shown in Figure 1.

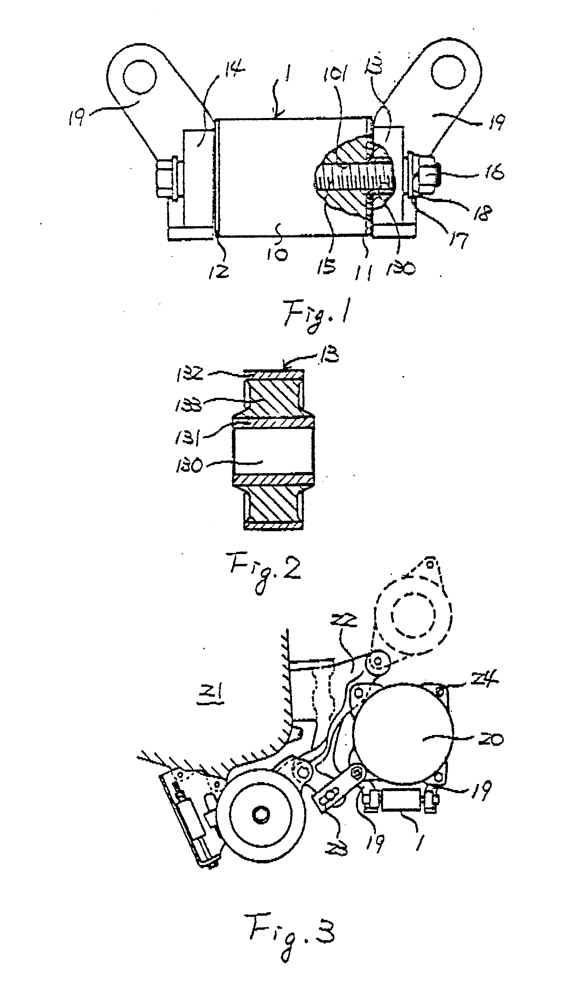

Figure 1 illustrates a vibration-absorbing, i.e.-damping mechanism 1 having a cylindrical mass 10 made of a material having a large specific gravity, such as iron; rubber washers 11 and 12 attached at both ends to the cylindrical mass 10, and bushings 13 and 14. A penetration hole 101 is axially formed through the cylindrical mass 10 and the washers 11 and 12.

As shown in Figure 2, the bushing 13, which is the same as the bushing 14, is constructed of an inner cylinder 131 including a penetration hole 130, an outer cylinder 132 and an elastic member 133, such as rubber. The elastic member 133 is compressed between the outer surface of the inner cylinder 131 and the inner surface of the outer cyliner 132. A J-shaped attachement 19 to mount the mechanism 1 to a compressor is fixed on the outer surface each of the bushings 13 and 14 by brazing. A screw bolt 15 passes through the penetration holes 101 and 130 and is fastened with a nut 16 through a washer 17 and a spring washer 18.

The vibration characteristic of the cylindrical mass 10 is chosen to correspond to the vibration frequency of a compressor, e.g., a point of resonance thereof, by varying the weight of cylindrical mass, the size of bushings 13 and 14, and/or hardness of the elastic member 133.

Figure 3 illustrates the installed state of the mechanism 1. A compressor 20 is mounted on an engine 21 through mounting bracket 22 and an adjustable stay 23. The mechanism 1 is installed on the compressor 20 through the attachments 19 by fastening screw bolts into holes 24 formed on the compressor 20.

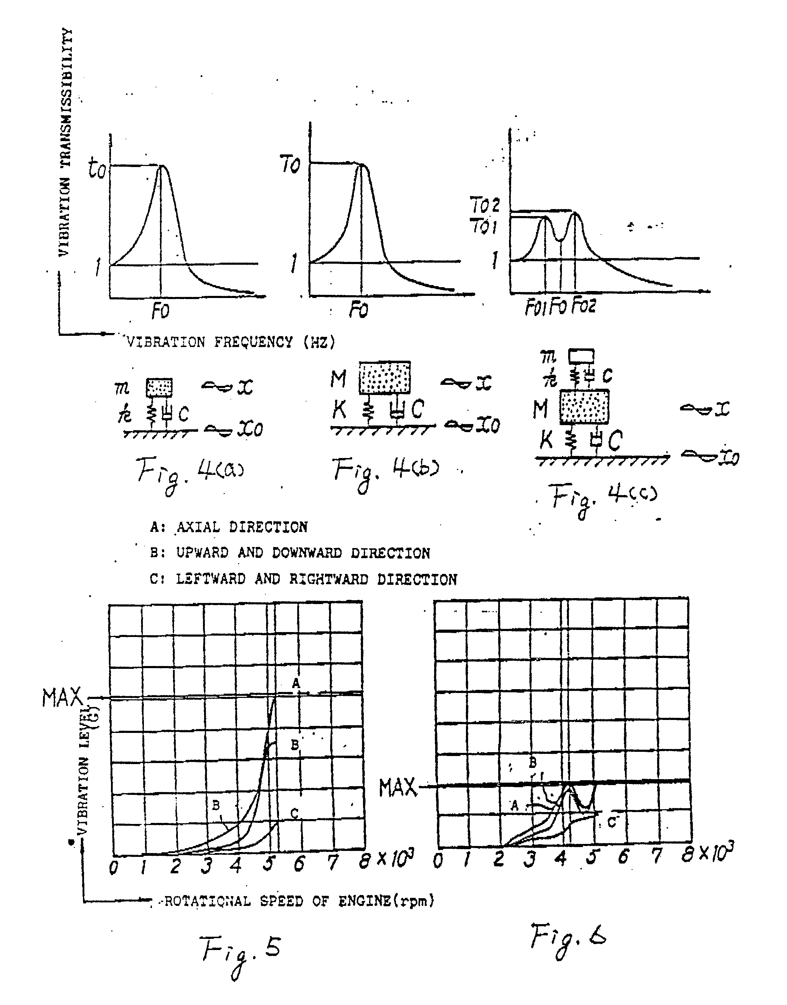

Figures 4(a)-4(c) illustrate the operating principle of a mechanism in accordance with the present invention. As shown in Figure 4(b), a compressor has an M-K-C vibration system and when its vibration frequency, i.e., a point of resonance is F0, vibration transmissibility is peak T0. Likewise, a vibration-absorbing mechanism according to the present invention has an m-k-c vibration system, which is the same proper number of vibration as the compressor, as shown in Figure 4(a). When the vibration frequency of the mechanism is F0, vibration transmissibility is peak t0. If the vibration-absorbing mechanism is installed on the compressor to reduce peak T0 of resonance point F0, vibration of the M-K-C vibration system changes so as to have two resonance points F01 and F02 as shown in Figure 4(c). Peaks T01 and T02 of vibration transmissibility corresponding to resonance points F01 and F02 become much lower than peak T0, respectively. M and m represent mass. K and k represent spring constant. C and c represent damping coefficient.

Figures 5 and 6 illustrate the relationship between rotational speed of an engine and vibration level. Figure 5 illustrates the vibration level of a compressor in correspondence with rotational speed of an engine and Figure 6 illustrates the vibration level of a compressor in correspondence with rotational speed of an engine when a vibration absorbing mechanism according to the present invention is installed on the compressor. As shown in Figure 6, the maximum vibration level of the compressor largely reduces in three directions, i.e., axial, upward and downward, and leftward and rightward directions.

Since the mass 10 and bushings 13 and 14 are formed symmetrially in the above three directions, resonance of the compressor does not occur in the rotational direction around the centre of symmetry. Accordingly, it is easy to predetermine the proper number of vibration in the above three direction.

Furthermore, even though the elastic member between outer and inner cylinders is broken, the cylindrical mass 10 is prevented from dropping.

## Claims

1. A vibration-damping mechanism for a compressor in an automotive air conditioning system, the mechanism comprising a mass (10) with a first penetration hole (101); first and second bushings (13,14) each including an inner cylinder (131) provided with a second penetration hole (130), an outer cylinder (132) and an elastic member (133) compressed between the outer surface of the inner cylinder and inner surface of the outer cylinder, the first and second bushings being disposed at opposite ends of the mass with the first and second penetration holes mutually aligned; and a screw bolt (15) passing through the first and second penetration holes and carrying by a nut (16) to hold the mass and bushing together.

2. A mechanism according to claim 1, wherein the mass (10) and bushings (13,14) are cylindrical.

3. A mechanism according to claim 2, wherein the mass (10) and bushings (13,14) are symmetrically formed in the axial, upward and downward, and opposite horizontal radial, directions, when the mechanism is oriented with its axis horizontal.

4. A mechanism according to any one of the preceding claims, further comprising an attachment (19) fixed on the outer cylinder (132) of each of the bushings (13,14).

Fig. 1

Fig. 2

Fig. 3

VIBRATION TRANSMISSIBILITY

$t_0$

$T_0$

$T_{02}$
$T_{01}$

1

$F_0$

$F_0$

$F_{01} F_0 F_{02}$

VIBRATION FREQUENCY (HZ)

$m$ ⟿ $x$
$k$ $C$ ⟿ $x_0$

Fig. 4(a)

$M$ ⟿ $x$
$K$ $C$ ⟿ $x_0$

Fig. 4(b)

$m$
$k$ $C$
$M$ ⟿ $x$
$K$ $C$ ⟿ $x_0$

Fig. 4(c)

A: AXIAL DIRECTION

B: UPWARD AND DOWNWARD DIRECTION

C: LEFTWARD AND RIGHTWARD DIRECTION

MAX

VIBRATION LEVEL(G)

A

B

B

C

MAX

B

A

C

0  1  2  3  4  5  6  7  8 × 10³

0  1  2  3  4  5  6  7  8 × 10³

ROTATIONAL SPEED OF ENGINE(rpm)

Fig. 5

Fig. 6